# EUROPEAN PATENT APPLICATION

(11) **EP 1 892 640 A2**
(43) Date of publication of application: **27.02.2008**
(21) Application number: 07253315.1
(22) Date of filing: 21.08.2007
(51) Int. Cl.: G06F 21/00

(54) **Method for registering rights issuer and domain authority in digital rights management and method for implementing secure content exchange functions using the same**

(30) Priority: 21.08.2006 KR 20060079078; 24.08.2006 KR 20060080696; 29.08.2006 KR 20060082392; 13.10.2006 KR 20060100037
(71) Applicant: PANTECH CO., LTD., Yeongdeungpo-gu Seoul (KR); Pantech & Curitel Communications Inc, Seoul (KR)
(72) Inventor: Jeong-So-young, Seoul (KR); Kim, Gun-wook, Seoul (KR); Park, Kyung, Daejeon-si (KR)
(74) Representative: Mounteney, Simon James

(57) **Abstract**

A method for registering a Domain Authority (DA) and a Rights Issuer (RI) for Digital Rights Management includes exchanging information between the DA and the RI. The DA and RI are registered by the exchanging of information before executing other protocol, and the method for registering can be incorporated into the following methods for implementing Digital Rights Management (DRM) with Secure Content Exchange features: (1) acquiring user domain Rights Objects (RO) by a DRM agent; (2) using the user domain RO by a 2.0 DRM agent; and (3) using imported user domain RO by a 2.0 DRM agent.

## Description

### BACKGROUND OF THE INVENTION

FIELD OF THE INVENTION

The present invention relates to Digital Rights Management, and more specifically, to a method for registering a Domain Authority and a Rights Issuer in Digital Rights Management and a method for implementing Secure Content Exchange functions using the same.

DISCUSSION OF THE BACKGROUND

With the increase of devices capable of delivering multimedia content to a user, a user may own, operate, or maintain control or responsibility over several devices, such as a networked home media center entertainment system and handheld devices with varying degrees of network connectivity. The handheld devices may include a mobile phone and a portable music player. The network connectivity may include, for example, wireless connectivity through a mobile phone or a wired broadband internet connection through a personal computer. The user may purchase and download content, such as multimedia content, or programs for operation on one device over the network connection.

However, the user may also wish to operate the content or programs on other devices owned by the user. Therefore, according to the Open Mobile Alliance (OMA) Digital Rights Management (DRM) Secure Content Exchange (SCE) Requirements (hereinafter, referred to as "OMA SCE Requirements"), suggested by OMA Mobile application software standardization organization, which is incorporated herein by reference, and which established the concept of a "user domain," the user may establish a user domain. A user domain may include other devices owned, operated, controlled, or under the responsibility of the user. The user may add devices to the user domain, and may use a device in the user domain to obtain content useable in the user domain. Further, the user may share content between devices in the user domain via network connectivity or via storage memory suitable for transferring content between devices, such as Secure Removable Media (SRM). Alternatively, such as where content is streamed over a network connection, the user may share authorization to stream the content with other devices in the user domain. This may be achieved by sharing, for example, user tokens associated with the authorization.

Thus, user domain refers to the user group that may share DRM content. A device may include any device that may share DRM content within the user domain. User domain management may include such management tasks as adding devices to and removing devices from the user domain, and application of domain policy.

Thus, a content provider may allow replication and use of content among devices in the user's user domain. Further, the content provider may limit and/or prohibit distribution and use of such content to devices outside the user domain.

A user domain may be created by a user through the operation of one device in the user domain with network connectivity. For example, a user may create a user domain by operating a device to view a list of possible domain policies. Various domain policies may be developed, and one of which may be selected by a user as most appropriate for that user. An SCE enabler may support only a single domain policy for a user domain. Domain policies for user domains, issued by a Domain Authority (DA), may include such constraints as the maximum number of devices in the user domain, temporal restrictions on the use of content, or frequency of the use of content.

The DA may provide the selected domain policy and a Domain Key (DK) to a Domain Enforcement Agent (DEA) stored in the user's device. The device may create and manage the user's user domain through the DEA.

The user may then add other devices to the user domain. For example, a user may connect a mobile phone, portable music player, and a Home Media Center to the device and add these devices to the user domain. The domain policy issued by the DA may limit the number of devices that may be added to the user domain, and the DEA may prevent the number of devices added to the user domain from exceeding this limit.

When a user acquires content with a user domain Rights Object (RO), the user may wish to share the content with the devices in the user domain or with devices outside the user domain. The user may then connect the connected device to other devices in the user domain to transfer copies of the content and its corresponding RO to other devices in the user domain.

An SCE enabler may enable a rights issuer (RI), which may exchange a Content Encryption Key (CEK) with a content issuer, to specify usage permissions for consumption of rights on and transfer of rights between devices that are in the user domain. Usage permissions may include permissions to play, copy, and/or move content among devices in the user domain. An SCE enabler may also enable an RI to specify usage permissions for rights among devices outside the user domain. Usage permissions may include permissions to copy and move content to devices outside the user domain. Alternatively, usage permissions may prohibit devices in the user domain from copying or moving content to devices outside the user domain.

The SCE enabler may permit the DEA to enforce the domain policy and to perform user domain management according to the domain policy specified by the DA. User domain management may include such management tasks as adding to and removing devices from the user domain, and application of domain policy.

Thus, the OMA SCE Requirements introduced the concept of "user domain" so that a user can directly perform user domain management instead of performing user domain management through an RI. Therefore, OMA SCE Requirements also introduced the concept of DA and DEA so that defining and describing a domain policy can be performed by the DA and enforcement of the domain policy can be performed by the DEA. The DA and DEA may be separate entities or may be integrated into a single entity.

A DA may define and describe the domain policy and may deliver such domain policy to the DEA. The DEA may receive the domain policy from the DA, and may define and manage the user domain based on the received domain policy. That is, the user domain generated by the DEA is also managed by the DEA. If the DA and DEA are integrated as a single entity, the DA may define the user domain and may perform domain management without interfacing with a separate DEA.

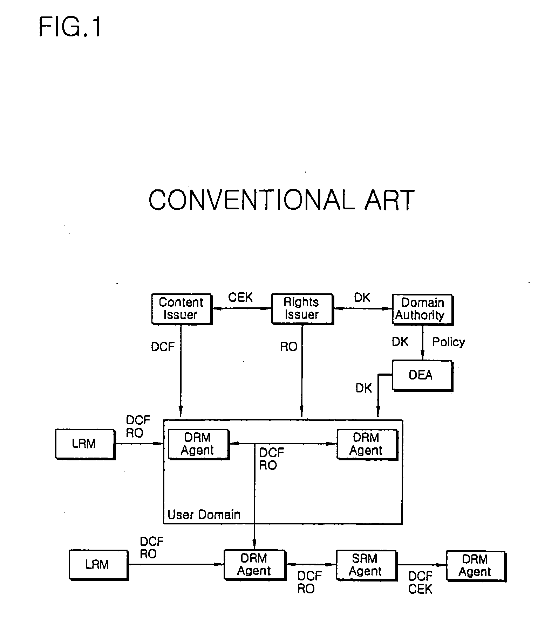

FIG. 1 shows a schematic diagram of OMA SCE Requirements.

Unlike the traditional OMA DRM V2.0 standard (hereinafter, referred to as "OMA DRM V2.0"), which is also incorporated by reference and which antedates the OMA SCE Requirements, the OMA SCE Requirements include:

(1) Import function by a Local Rights Manager (LRM);

(2) User Domain function by the DA and the DEA; and

(3) Move function to move RO from one device to another.

Hereinafter, the Import function and User Domain function will be described in more detail.

OMA SCE Requirements provide an Import function that may be performed by the LRM. Import function refers to converting non-OMA DRM data into OMA DRM data.

For example, a device compatible with OMA DRM may attempt to play non-OMA DRM data. In this case, the non-OMA DRM data should be converted or imported into OMA DRM data by an LRM according to OMA SCE Requirements. Thus, the LRM imports the non-OMA DRM data into DRM Content Format (DCF) and imports an RO for the OMA DRM, which are called "Imported DCF" and "Imported RO," respectively. Imported DCF and Imported RO, which support OMA DRM, can be used by DRM agent in a device compatible with OMA DRM according to OMA SCE Requirements.

As described above, user domain permits a user to perform user domain management for a number of devices included in the user domain instead of performing user domain management for each device through a rights issuer (RI), as was established in the traditional OMA DRM V2.0 standard.

Other features of the traditional OMA DRM V2.0 standard are compatible with OMA SCE Requirements, however. For example, OMA DRM V2.0 includes a 4-pass registration protocol.

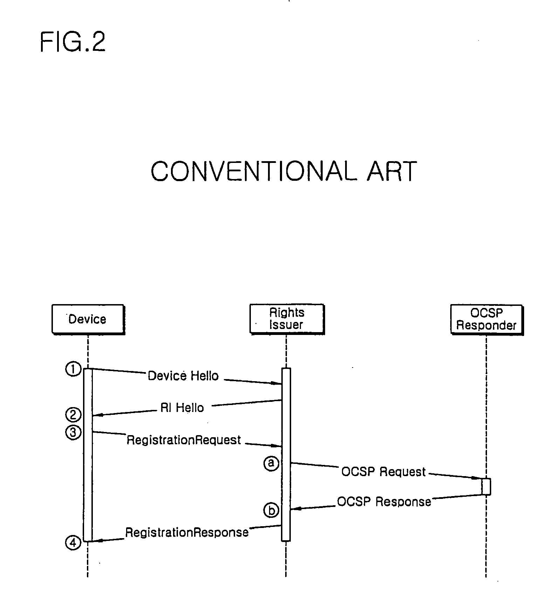

FIG. 2 illustrates a 4-pass registration protocol used by a device and a Rights Issuer (RI) according to OMA DRM V2.0.

OMA DRM V2.0 uses the 4-pass registration protocol so a device is registered with an RI to acquire an RO. The 4-pass registration protocol is used for the device and the RI to exchange information between and register with each other. If the protocol is successful, the device can possess RI context, which contains information of the RI, and the RI can possess information of the device.

According to the 4-pass registration protocol, the device first transfers a Device Hello message including device information to the RI. The Device Hello message may contain protocol version, device ID, and supported cipher algorithms for the device.

The RI transfers an RI Hello message including RI information to the device in the second stage. The RI Hello message contains transfer result, session ID, protocol version, RI ID, supported algorithm, and other verification and server information.

The device then transfers a RegistrationRequest message to the RI to register the device with the RI in the third stage. The RegistrationRequest message contains verification data, such as session ID, message transfer time, certificate and signature, and nonce.

The RI finally transfers a RegistrationResponse message to the device in the fourth stage. This RegistrationResponse message contains verification data, such as device registration result, session ID, RI certificate/digital signature, and Online Certificate Status Protocol (OCSP) Response, which may be sent to the RI in response to an OCSP Request message that may be sent from the RI to an OCSP Responder upon certain contingencies that will not be described in further detail.

However, the OMA SCE Requirements do not include a method for registering a DA and an RI or the implementation of SCE using the registration method.

### SUMMARY OF THE INVENTION

This invention provides a method for registering a DA and an RI.

The present invention also provides a method for supporting SCE functions using a method for registering a DA and an RI.

Additional features of the invention will be set forth in the description which follows, and in part will be apparent from the description, or may be learned by practice of the invention.

The present invention discloses a method for registering a Domain Authority (DA) and a Rights Issuer (RI) for Digital Rights Management, including exchanging information between the DA and the RI.

The present invention also discloses a method for implementing Secure Content Exchange (SCE) functions for Digital Rights Management (DRM), including registering a DRM agent with a Domain Authority (DA) to join a user domain, registering the DRM agent with a Rights Issuer (RI), exchanging information between the DA and the RI to register the DA and the RI, requesting a Rights Object (RO) for the user domain from the RI, exchanging information between the RI and the DA to acquire information about the user domain, and transferring the RO for the user domain to the DRM agent.

The present invention also discloses a method for implementing Secure Content Exchange (SCE) functions for Digital Rights Management (DRM), including exchanging information between a Domain Authority (DA) and a Rights Issuer (RI) to register the DA and the RI, registering a SCE DRM agent with the DA to join a user domain, acquiring a Rights Object (RO) for the user domain from the RI, transferring the RO for the user domain and a DRM Content Format (DCF) to a 2.0 DRM agent, and registering the 2.0 DRM agent to the DA through the RI.

The present invention also discloses a method for implementing Secure Content Exchange (SCE) functions for Digital Rights Management (DRM), including, registering a Local Rights Manager (LRM) with a Domain Authority (DA) to join a user domain, creating an imported Rights Object (RO) for the user domain, exchanging information between the DA and a Rights Issuer (RI) to register the DA and the RI, transferring the RO for the user domain and a DRM Content Format (DCF) to a 2.0 DRM agent, and registering the 2.0 DRM agent to the DA through the RI.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate exemplary embodiments of the invention, and together with the description serve to explain the aspects of the invention.

FIG. 1 shows a schematic diagram of OMA SCE Requirements.

FIG. 2 illustrates a 4-pass registration protocol used by a device and a Rights Issuer (RI) according to OMA DRM V2.0.

FIG. 3 illustrates a method for registering a domain authority and a rights issuer according to a first exemplary embodiment of the present invention.

FIG. 4 illustrates a method for acquiring a rights object for user domain by an SCE DRM agent using the registration method according to the first exemplary embodiment of the present invention.

FIG. 5 illustrates a method for using a rights object for user domain by a 2.0 DRM agent using the registration method according to a second exemplary embodiment of the present invention.

FIG. 6 illustrates a method for using an imported user domain rights object by a 2.0 DRM agent using the registration method according to a third exemplary embodiment of the present invention.

### DETAILED DESCRIPTION OF THE ILLUSTRATED EMBODIMENTS

The invention is described more fully hereinafter with reference to the accompanying drawings, in which exemplary embodiments of the invention are shown. This invention may, however, be embodied in many different forms and should not be construed as limited to the exemplary embodiments set forth herein. Rather, these exemplary embodiments are provided so that this disclosure is thorough, and will fully convey the scope of the invention to those skilled in the art. In the drawings, the size and relative sizes of layers and regions may be exaggerated for clarity. Like reference numerals in the drawings denote like elements.

In order to effectively support multiple functions according to OMA SCE Requirements, the RI 40 should receive information about a Domain Authority (DA) 20, and information about the RI 40 should be received by the DA 20. However, no mechanism is defined in the OMA SCE Requirements to establish the information exchange between the DA 20 and the RI 40.

A registration function between DA and RI may allow DA and RI to exchange information for implementing protocols or functions therebetween. Additionally, the registration function should precede any other protocol or function between DA and RI.

Furthermore, the registration function should allow the DA information to be notified in advance to the RI, so that the registration function can be used even if the RI cannot access the DA.

Accordingly, the present exemplary embodiment discloses a registration mechanism between the DA 20 and the RI 40 (hereinafter also referred to as 'DA-RI') that may be incorporated into (1) the way a DRM agent acquires a RO for user domain, (2) the way a 2.0 DRM agent uses the user domain RO, and (3) the way the 2.0 DRM agent uses an imported RO for user domain.

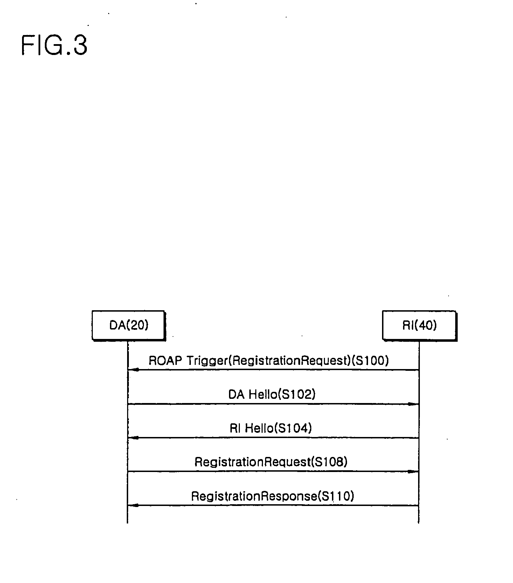

FIG. 3 illustrates a method for registering a DA and an RI according to a first exemplary embodiment of the present invention.

At the first stage, the RI 40 transfers to the DA 20 a Rights Object Acquisition Protocol (ROAP) trigger message, which may be referred to as a RegistrationRequest message, to trigger the registration of the DA 20 with the RI 40 in operation S100. However, the ROAP trigger message is not necessarily required for the registration of the DA 20. Even if the ROAP trigger message is not sent, the DA 20 can transfer a DA Hello message to the RI 40 to initiate the registration procedure.

At the second stage, the DA 20 transfers the DA Hello message to the RI 40 to provide DA 20 basic information in operation S102. The DA Hello message may contain protocol version, DA ID, and supported cipher algorithms. If the DA 20 does not receive the ROAP trigger message from the RI 40, the DA-RI registration procedure is initiated by transferring the DA Hello message to the RI 40.

At the third stage, the RI 40 transfers an RI Hello message to the DA 20 in operation S104. The RI Hello message contains a DA Hello message transfer result, session ID, protocol version, RI ID, supported algorithm, and other verification and server information.

At the fourth stage, the DA 20 transfers a RegistrationRequest message to the RI 40 so that the DA 20 can be registered to the RI 40 in operation S108. The RegistrationRequest message contains verification data, such as session ID, message transfer time, certificate/digital signature, and nonce. The RegistrationRequest message can be implemented similarly to the RegistrationRequest message of OMA DRM V2.0, as described above.

At the fifth stage, the RI 40 transfers to the DA 20 the RegistrationResponse message containing the registration result and information to register the RI 40 with the DA 20 in operation S110. The RegistrationResponse message contains verification information, such as DA registration result, session ID, RI certificate/digital signature, and OCSP Response. The RegistrationResponse message can be implemented similarly to the RegistrationResponse message of OMA DRM V2.0, as described above.

After completing the DA-RI registration procedure, the DA 20 possesses RI context having the RI information, and the RI 40 registers the DA information therein. The DA-RI registration procedure may only be performed once, at the time of the first DA-RI information exchange. However, if the validity term for RI context has expired, the DA 20 may resume or repeat the registration procedure.

In another exemplary embodiment, the RI 40 may first request the registration from the DA 20. In other words, the RI 40 may first request the registration from the DA 20 by transferring the RI Hello message to the DA 20. Then, the DA 20 may respond to the RI 40 by transferring the DA Hello message to the RI 40. Next, the RI 40 transfers to the DA 20 the RegistrationRequest message for registration, and the DA 20 transfers the RegistrationResponse message to the RI 40. In this case, details of the messages should be modified to be suited to their corresponding context. The messages may be substantially similar in both exemplary embodiments described above.

Even though the DA and RI respectively exist on private and public networks, the DA-RI registration mechanism can be initially executed to allow the RI to access to the DA.

Any other DA-RI protocol/function may be supported by the above-mentioned DA-RI registration function. Accordingly, the DA-RI registration function may be performed before any other DA-RI protocol/function.

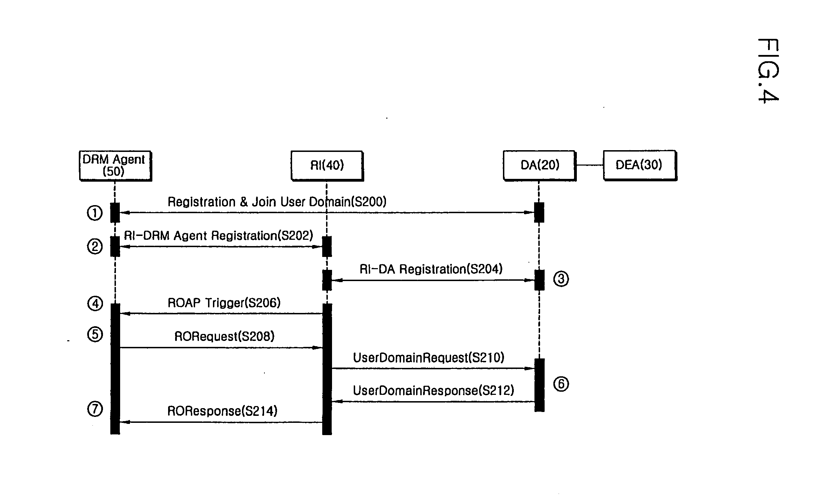

FIG. 4, FIG. 5, and FIG. 6 illustrate methods for implementing SCE functions using the above-mentioned DA-RI registration method.

FIG. 4 illustrates a method for acquiring a rights object for user domain by an SCE DRM agent using the registration method according to the first exemplary embodiment of the present invention.

The present exemplary embodiment discloses a method for acquiring the RO for user domain from the RI 40 by an SCE DRM agent 50. That is, the present exemplary embodiment describes how the DA-RI registration method is performed and at which stage the DA-RI registration method is executed. The present exemplary embodiment assumes that the user domain is managed by the DA 20 and DEA 30, which are combined with each other. If the DA 20 and the DEA 30 are separated from each other, the user domain is managed by the DEA 30.

At the first stage, the SCE DRM agent 50 is registered with the DA 20 to join the user domain in operation S200. This stage may be implemented similarly to the procedure for the registration of the DRM agent with the domain according to OMA DRM V2.0, which may require multiple procedures for message transfer and data exchange. Once this stage is successfully completed, the SCE DRM agent 50 is a member of the user domain and may use the user domain RO.

At the second stage, the SCE DRM agent 50 is registered with the RI 40 in operation S202 by a mechanism similar to 4-pass registration protocol of the RI 40 of OMA DRM V2.0. This stage includes a mutual verification/key exchange, and mutual exchange/confirmation of multiple parameters for post-registration communications. The registration procedure may be performed once when the DRM agent 50 first attempts to acquire the RO of the RI 40. However, if the DRM agent 50 is no longer allowed to access the RI 40 due to expiration of validity term, this stage may performed again.

At the third stage, the DA 20 is registered with the RI 40 through the DA-RI registration mechanism in operation S204. This stage is performed early since the RI 40 inquires into user domain information from the DA 20 to issue the user domain RO to the SCE DRM agent 50 at the sixth stage. Thus, the third stage may be performed any time before the sixth stage.

At the fourth stage, the RI 40 transfers to the SCE DRM agent 50 a ROAP trigger message for a RORequest message in operation S206. The SCE DRM agent 50 performs a ROAP by accessing the RI 40 to transfer the RORequest message. In this case, the ROAP trigger message triggers the SCE DRM agent 50 to acquire the RO from the RI 40. The ROAP trigger message may not be required. Even if the ROAP trigger message is not sent, the SCE DRM agent 50 may initiate the ROAP by transferring the RORequest message to the RI 40.

At fifth stage, the SCE DRM agent 50 transfers the RORequest message to the RI 40 to acquire the user domain RO from the RI 40 in operation S208. The RORequest message may be similar to a RORequest message of a 2-pass ROAP protocol according to OMA DRM V2.0. In this case, the SCE DRM agent 50 transfers to the RI 40 the information for RO request and user verification, such as device ID, domain ID, RI ID, request time, RO information, and certificate/digital signature. The domain ID may be user domain ID, acquired through the DA 20.

In this case, the SCE DRM agent 50 has information about the DA 20 that manages the user domain information for acquiring the user domain RO, and transfers the information about the DA 20 to the RI 40.

At the sixth stage, the RI 40 exchanges information with the DA 20 for acquiring the user domain information in operations S210 and S212. Since the RI 40 issues the user domain RO to the SCE DRM agent 50, the RI 40 verifies with the DA 20 whether the SCE DRM agent 50 belongs to the user domain. In addition, the RI 40 receives a User Domain Key (DK) from the DA 20. In this case, when the RI 40 transfers UserDomainRequest message to the DA 20, the DA 20 responds to the RI 40 by transferring UserDomainResponse message containing appropriate information. At this stage, the RI 40 and the DA 20 exchange the DK and other information for the RI 40 to create the user domain RO.

At the seventh stage, the RI 40 transfers the ROResponse message to the SCE DRM agent 50 in operation S214. At this stage, the RI 40 transfers the user domain RO to the SCE DRM agent 50. The ROResponse message may be substantially similar to the ROResponse message of 2-pass ROAP protocol of OMA DRM V2.0. In this case, the RI 40 transfers to the SCE DRM agent 50 information for RO transfer and user verification, such as process result, device ID, RI ID, created RO information, and certificate/digital signature.

In the present exemplary embodiment, the RI 40 acquires the authorization procedure concerning the user domain and the information acquisition procedure to issue the user domain RO to the SCE DRM agent 50. Accordingly, the above-mentioned DA-RI registration mechanism permits the RI 40 to acquire in advance the information concerning the DA 20.

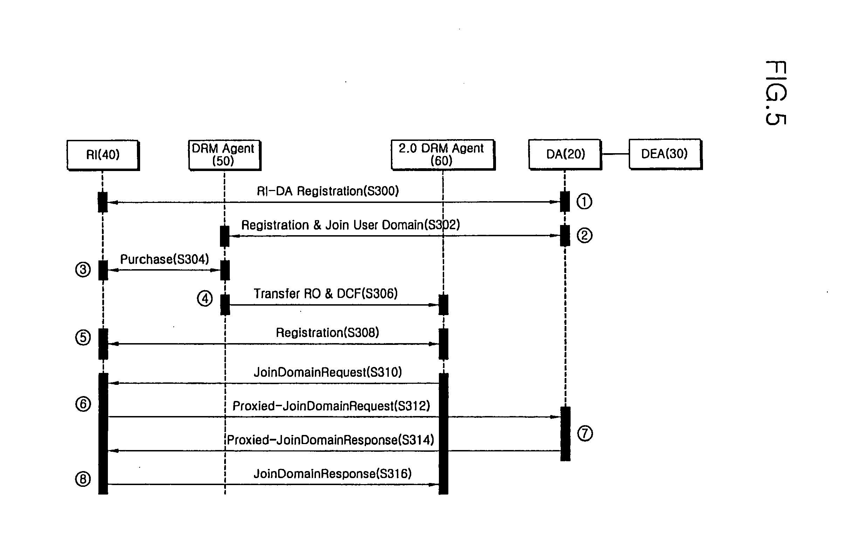

FIG. 5 illustrates a method for using a rights object for user domain by a 2.0 DRM agent using the registration method according to a second exemplary embodiment of the present invention.

The second exemplary embodiment describes how the DA-RI registration method is implemented and at which stage the DA-RI registration method is executed. The second exemplary embodiment assumes that the user domain is managed by the DA 20 and the DEA 30, which are combined with each other. If the DA 20 and the DEA 30 are separated from each other, the user domain is managed by the DEA 30.

At the first stage, the DA 20 is registered to the RI 40 through the DA-RI registration mechanism in operation S300. This stage is performed in advance since the RI 40 conducts user domain registration with the DA 20 on behalf of the 2.0 DRM agent 60 at the seventh stage so that the 2.0 DRM agent 60 can use the user domain RO. The first stage may be performed any time before the seventh stage. If the DA-RI registration procedure has been already performed, no further DA-RI registration procedure may be necessary.

At the second stage, the SCE DRM agent 50 is registered with the DA 20 to join the user domain in operation S302. This stage may be implemented similarly to the procedure for the registration of the DRM agent to the domain of OMA DRM V2.0. Once this stage is successfully completed, the SCE DRM agent 50 is a member of the user domain and may use the user domain RO.

At the third stage, the SCE DRM agent 50 acquires the user domain RO from the RI 40 in operation S304. This stage follows the above-described method according to the first embodiment shown in FIG. 4.

At the fourth stage, the SCE DRM agent 50 transfers the acquired user domain RO and DRM Content Format (DCF) to a 2.0 DRM agent 60 in operation S306. The transfer method may be any method for transferring content associated with DRM from one device to another device.

The 2.0 DRM agent 60 may be registered with the DA 20 and join the user domain to use the user domain RO. However, the 2.0 DRM agent 60 may not make a direct application for admission to the DA 20, and may make an indirect application for admission to the DA 20 through the RI 40. After registration of the 2.0 DRM agent 60 with the user domain, the 2.0 DRM agent 60 receives a DK and uses the user domain RO. Hereinafter, the fifth, sixth, seventh, and eighth stages will be described.

At the fifth stage, the DRM 2.0 agent 60 is registered with the RI 40 using the 4-pass registration protocol of OMA DRM V2.0 in operation S308. If any information is required to use the user domain RO, the information may be further transferred using an extension or other message field.

At the sixth stage, the 2.0 DRM agent 60 transfers a JoinDomainRequest message to acquire a DK and use the user domain RO in operation S310. Since the 2.0 DRM agent 60 may not directly access the DA 20 to acquire the DK, the 2.0 DRM agent 60 may acquire the DK indirectly through the RI 40. Accordingly, the JoinDomainRequest message may be written similarly to JoinDomainRequest message of DRM V2.0.

At the seventh stage, the RI 40 conducts user domain registration to the DA 20 on behalf of the 2.0 DRM agent 60 in operation S312. In this case, a JoinDomainRequest message, which is transferred by the 2.0 DRM agent 60 at the sixth stage, may contain a tag that explicitly requests the user domain registration. Alternatively, a domain ID field of the JoinDomainRequest message corresponds to a user domain ID area, and if a corresponding user domain ID is input, access to the DA 20 is allowed.

In the former scenario, the RI 40 has a small amount of overhead to implement the process, while in the latter scenario, the backward compatibility of the 2.0 DRM agent can be supported.

When the seventh stage is complete, the RI 40 acquires the DK on behalf of the 2.0 DRM agent 60, so that the user domain RO can be used.

At the eighth stage, the DK, acquired at the seventh stage, is transferred to the 2.0 DRM agent in operation S316. In this case, the JoinDomainResponse message may be written similarly to the JoinDomainResponse message of DRM V2.0.

Accordingly, in the present exemplary embodiment, the DA-RI registration mechanism is performed such that the RI 40 acquires the information about the DA 20 in advance. If the DA-RI registration procedure is already carried out at the third stage and the validity term has not expired, the DA-RI registration procedure may not be required.

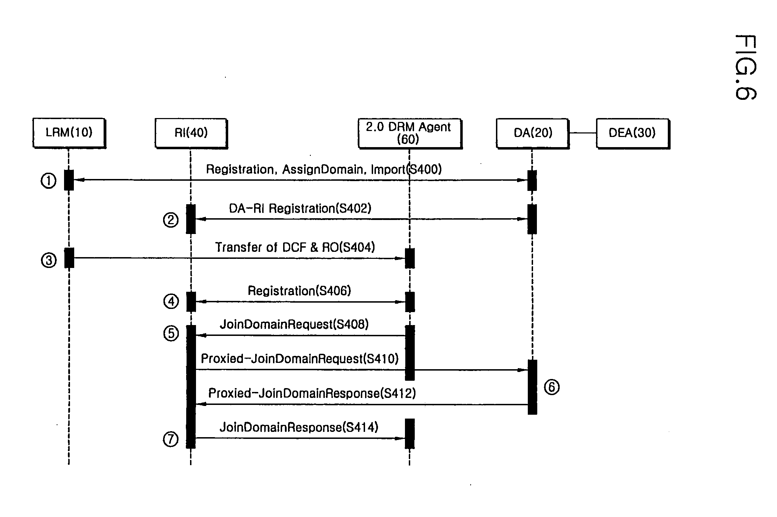

FIG. 6 illustrates a method for using an imported user domain rights object by a 2.0 DRM agent using the registration method according to a third exemplary embodiment of the present invention.

More specifically, the third exemplary embodiment discloses a method for using user domain RO, imported by a Local Rights Manager (LRM) 10, by the 2.0 DRM agent 60. The present exemplary embodiment describes how the DA-RI registration method is included and at which stage the DA-RI registration method is executed. The present exemplary embodiment assumes that the user domain is managed by the Domain Authority (DA) 20 and the Domain Enforcement Agent (DEA) 30, which are combined with each other. If the DA 20 and the DEA 30 are separated from each other, the user domain is managed by the DEA 30.

At the first stage, the LRM 10 registers with the DA 20, allocates domains, and receives import procedures to convert non-OMA DRM RO into OMA DRM RO for user domain in operation S400. This stage may include multiple procedures for message transfer and data exchange. If this stage is successful, the LRM 10 creates the imported user domain RO and imported DCF, which can be used by the 2.0 DRM agent 60.

Different methods for importing DRM data by an LRM 10 are disclosed and claimed in the application having attorney docket no. P2199US00, which is assigned to the same assignees of the present application.

At the second stage, the DA 20 is registered to the RI 40 through the DA-RI registration mechanism in operation S402. This stage is performed in advance since the RI 40 admits the 2.0 DRM agent 60 to the user domain at the sixth stage so that the 2.0 DRM agent 60 can use the imported user domain RO. Thus, the second stage may be performed any time before the sixth stage. If the second stage is already carried out and the validity term has not expired, the second stage may not be performed.

At the third stage, the user domain RO and DCF are transferred from the LRM 10 to the 2.0 DRM agent in operation, S404. The transfer method may be any method for transferring content associated with DRM from one device to another device.

The 2.0 DRM agent 60, which receives the imported user domain RO, may not directly conduct the registration with the DA 20. Accordingly, the RI 40 conducts the registration to the DA 20 on behalf of the 2.0 DRM agent 60. After the registration to the DA 20, the 2.0 DRM agent 60 receives a DK and uses the user domain RO. Hereinafter, the fourth, fifth, sixth, and seventh stages will be described, which are similar to the fifth, sixth, seventh, and eighth stages in the second exemplary embodiment described above.

Accordingly, in the present embodiment, the DA-RI registration mechanism is included such that the RI 40 acquires the information about the DA 20 in advance. If the DA-RI registration procedure is already carried out and the validity term has not expired, the DA-RI registration procedure may not be required.

As apparent from the above description, it is possible to effectively implement the SCE functions through the DA-RI registration mechanism according to the exemplary embodiments of the present invention, including: (1) a method for acquiring the user domain RO by the DRM agent 50; (2) a method for using the user domain RO by the 2.0 DRM agent 60; and (3) a method for using the imported user domain RO by the 2.0 DRM agent 60.

In addition, since the DA-RI registration function is used to notify the RI of the DA information in advance, the DA-RI registration function can be used even if the RI does not directly access the DA.

Furthermore, the DA-RI registration function may provide in advance the information for implementing any new protocol/function between the DA and RI. Accordingly, the DA-RI registration function may precede any new protocol/function between the DA and RI.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.

## Claims

1. A method for registering a Domain Authority (DA) and a Rights Issuer (RI) for Digital Rights Management (DRM), comprising:
exchanging information between the DA and the RI.

2. A method according to claim 1, wherein exchanging information comprises:
transferring DA information to the RI;
transferring RI information to the DA;
creating registration information based on the RI information, and transferring the registration information to the RI; and
registering the DA based on the registration information, and transferring a registration result to the DA.

3. A method according to claim 1, wherein exchanging information comprises:
transferring RI information to the DA;
transferring DA information to the RI;
creating registration information based on the DA information, and transferring the registration information to the DA; and
registering the RI based on the registration information, and transferring a registration result to the RI.

4. A method according to claim 1, wherein exchanging information is performed before any other protocol is executed between the DA and the RI.

5. A method for implementing Secure Content Exchange (SCE) functions for Digital Rights Management (DRM), comprising:
registering a DRM agent with a Domain Authority (DA) to join a user domain; registering the DRM agent with a Rights Issuer (RI);
exchanging information between the DA and the RI to register the DA and the RI; requesting a Rights Object (RO) for the user domain from the RI;
exchanging information between the RI and the DA to acquire information about the user domain; and
transferring the RO for the user domain to the DRM agent.

6. A method according to claim 5, wherein the DRM agent receives DA information before requesting the RO for the user domain.

7. A method according to claim 5, wherein exchanging information comprises:
transferring DA information to the RI;
transferring RI information to the DA;
creating registration information based on the RI information, and transferring the registration information to the RI; and
registering the DA based on the registration information, and transferring a registration result to the DA.

8. A method according to claim 5, wherein exchanging information comprises:
transferring RI information to the DA;
transferring DA information to the RI;
creating registration information based on the DA information, and transferring the registration information to the DA; and
registering the RI based on the registration information, and transferring a registration result to the RI.

9. A method according to claim 5, wherein exchanging information is performed before any other protocol is executed between the DA and the RI.

10. A method for implementing Secure Content Exchange (SCE) functions for Digital Rights Management (DRM), comprising:
exchanging information between a Domain Authority (DA) and a Rights Issuer (RI) to register the DA and the RI;
registering a SCE DRM agent with the DA to join a user domain;
acquiring a Rights Object (RO) for the user domain from the RI;
transferring the RO for the user domain and a DRM Content Format (DCF) to a 2.0 DRM agent; and
registering the 2.0 DRM agent to the DA through the RI.

11. A method according to claim 10, wherein exchanging information comprises:
transferring DA information to the RI;
transferring RI information to the DA;
creating registration information based on the RI information, and transferring the registration information to the RI; and
registering the DA based on the registration information, and transferring a registration result to the DA.

12. A method according to claim 10, wherein exchanging information comprises:
transferring RI information to the DA;
transferring DA information to the RI;
creating registration information based on the DA information, and transferring the registration information to the DA; and
registering the RI based on the registration information, and transferring a registration result to the RI.

13. A method according to claim 10, wherein exchanging information is performed before any other protocol is executed between the DA and the RI.

14. A method for implementing Secure Content Exchange (SCE) functions for Digital Rights Management (DRM), comprising:
registering a Local Rights Manager (LRM) with a Domain Authority (DA) to join a user domain;
creating an imported Rights Object (RO) for the user domain;
exchanging information between the DA and a Rights Issuer (RI) to register the DA and the RI;
transferring the RO for the user domain and a DRM Content Format (DCF) to a 2.0 DRM agent; and
registering the 2.0 DRM agent to the DA through the RI.

15. A method according to claim 14, wherein exchanging information comprises:
transferring DA information to the RI;
transferring RI information to the DA;
creating registration information based on the RI information, and transferring the registration information to the RI; and
registering the DA based on the registration information, and transferring a registration result to the DA.

16. A method according to claim 14, wherein exchanging information comprises:
transferring RI information to the DA;
transferring DA information to the RI;
creating registration information based on the DA information, and transferring the registration information to the DA; and
registering the RI based on the registration information, and transferring a registration result to the RI.

17. A method according to claim 14, wherein exchanging information is performed before any other protocol is executed between the DA and the RI.
